# EUROPÄISCHE PATENTANMELDUNG

(11) **EP 2 383 567 A1**
(43) Veröffentlichungstag der Anmeldung: **02.11.2011**
(21) Anmeldenummer: 11162535.6
(22) Anmeldetag: 15.04.2011
(51) Int. Cl.: G01N 21/90

(54) **Schwebstofferkennung in mit Flüssigkeit befüllten Behältnissen**

(30) Priorität: 29.04.2010 DE 102010018823
(71) Anmelder: Krones AG, 93073 Neutraubling (DE)
(72) Erfinder: Dünzinger, Bernhard, 84069, Unterdeggenbach (DE); Niedermeier, Anton, 93326, Offenstetten (DE); Fiegler, Rudolf, 93053, Regensburg (DE); Schober, Stefan, 93105, Tegernheim (DE)
(74) Vertreter: Hannke, Christian

(57) **Zusammenfassung**

Die Erfindung betrifft eine Vorrichtung (1) zum Inspizieren von mit Flüssigkeit befüllten Behältnissen (1) mit einer Transporteinrichtung, welche die Behältnisse (10) entlang eines vorgegebenen Transportpfades (P) transportiert, mit einer Behältnisbewegungseinrichtung (4), welche die Behältnisse zusätzlich zu der durch den Transport der Behältnisse (10) verursachten Bewegung bewegt, um eine Bewegung der in dem Behältnis angeordneten Flüssigkeit zu erzeugen, wobei die Vorrichtung eine in der Transportrichtung der Behältnisse (10) nach der Behältnisbewegungseinrichtung (4) angeordnete Inspektionseinrichtung (6) aufweist, und die Inspektionseinrichtung (6) eine erste Bildaufnahmeeinrichtung (12) aufweist, welche insbesondere eine Seitenwandung der Behältnisse (10) beobachtet. Erfindungsgemäß ist zwischen der Behältnisbewegungseinrichtung (4) und der Inspektionseinrichtung (6) ein Ruhebereich (7) angeordnet, in dem die Behältnisse transportiert werden.

## Beschreibung

Die vorliegende Erfindung bezieht sich auf eine Vorrichtung und ein Verfahren zum Inspizieren von Behältnissen. Aus dem Stand der Technik sind diverse Vorrichtungen und Verfahren zum Inspizieren von mit Flüssigkeit befüllten Behältnissen bekannt. Im Rahmen der Getränkeherstellung kann es immer wieder vorkommen, dass während eines Abfüllprozesses Fremdkörper in das Behältnis gelangen. Bei derartigen Fremdkörpern kann es sich beispielsweise um metallische Körper handeln, aber auch um organische Störkörper, wie beispielsweise Kleinstinsekten und dergleichen.

Es besteht der Bedarf, derartige Behältnisse aus einem Produktionsprozess auszuschleusen. Zu diesem Zwecke sind im Stand der Technik eine Vielzahl von Vorrichtungen entwickelt worden, mit welchen unterschiedliche Fremdkörper in Flüssigkeiten erkannt werden können. Aus der EP 1 570 256 B1 ist eine Vorrichtung zum Inspizieren von gefüllten und verschlossenen Gefäßen bekannt. Dabei sind Antriebselemente vorgesehen, welche die Gefäße um ihre Längsachse drehen, sodass die Flüssigkeit in den Gefäßen selbst zu rotieren beginnt, um auf diese Weise vorhandene Fremdkörper vom Gefäßboden aufzuwirbeln.

An diese Antriebselemente schließt sich eine im Dunkelfeldverfahren arbeitende Inspektionseinrichtung zur Erkennung strahlender Fremdkörper in dem Füllgut an. Durch diese Vorgehensweise ist es möglich, die Behältnisse beispielsweise während eines Bandtransportes seitlich zu durchleuchten und auf reflektierende Inhaltsstoffe zu untersuchen. Die Behältnisse werden hier beispielsweise im Rahmen eines Karussells durchleuchtet, wobei hier die Behältnisse selbst auch stillstehen können, und auf Inhaltsstoffe untersucht.

Damit dient hier die rotierende bzw. in Bewegung versetzte Flüssigkeit zum besseren Detektieren von Fremdkörpern im Behälter. Bei diesen Fremdkörpern kann es sich beispielsweise um Insekten, flache Kunststoffe und dergleichen handeln. Probleme bereiten bei dieser Vorgehensweise jedoch schwimmende Fremdkörper, welche am Füllpegel nicht erkannt werden können. Daneben können auch teilweise abgesetzte Fremdkörper nur bedingt oder nur sehr schwer erkannt werden, wie beispielsweise Fäden, die sich am Boden des Behältnisses abgesetzt haben.

Der vorliegenden Erfindung liegt daher die Aufgabe zugrunde, eine Vorrichtung zu schaffen, welche auch die Detektion solcher Fremdkörper ermöglicht, die beispielsweise auf der Flüssigkeit schwimmen, oder sich am Behälterboden abgesetzt haben. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Inspizieren von mit Flüssigkeit befüllten und insbesondere auch verschlossenen Behältnissen, weist eine Transporteinrichtung auf, welche die Behältnisse entlang eines vorgegebenen Transportpfades transportiert. Weiterhin weist die Vorrichtung eine Behältnisbewegungseinrichtung auf, welche die Behältnisse zusätzlich zu der durch den Transport der Behältnisse verursachten Bewegung bewegt, um eine Bewegung der in dem Behältnis angeordneten Flüssigkeit zu erzeugen. Dabei weist die Vorrichtung eine in der Transportrichtung der Behältnisse nach der Behältnisbewegungseinrichtung angeordnete Inspektionseinrichtung auf, wobei die Inspektionseinrichtung eine erste Bildaufnahmeeinrichtung aufweist, welche das Füllgut durch eine Wandung des Behältnisses und insbesondere eine Seitenwandung des Behältnisses beobachtet. Zur Vereinfachung wird nachfolgend die Begrifflichkeit Seitenwandung der Behältnisse benutzt. Erfindungsgemäß ist zwischen der Behältnisbewegungseinrichtung und der Inspektionseinrichtung ein Ruhebereich angeordnet, in dem die Behältnisse transportiert werden.

Bei der Bewegung der Flüssigkeit in dem Behältnis kann es sich um beispielsweise eine Verwirbelung der Flüssigkeit handeln.

Im Stand der Technik findet die Bewegung der Behältnisse insbesondere zu einem Zeitpunkt statt, in dem sich die Flüssigkeit innerhalb des Behältnisses, beispielsweise aufgrund eines schnellen Drehbewegungsbehältnisses, noch bewegt. Im Rahmen der vorliegenden Erfindung wird vorgeschlagen, dass die Beobachtung erst in einem zumindest teilweise beruhigten Zustand der Flüssigkeit stattfindet, indem sich jedoch die Fremdkörper noch in Bewegung befinden. Diese erfindungsgemäße Vorgehensweise eignet sich insbesondere für sehr leichte Fremdkörper, die auf der Flüssigkeitsoberfläche zum Liegen kommen. Damit dient der Ruhebereich dazu, um eine Relativbewegung der Flüssigkeit gegenüber dem Behältnis, welche durch die Behältnisbewegungseinrichtung verursacht wurde, zu verlangsamen bzw. im Wesentlichen anzuhalten.

Bevorzugt werden die Behältnisse zwar durch den Ruhebereich transportiert, dabei jedoch im Wesentlichen keiner zusätzlichen Bewegung bzw. Beschleunigung mehr unterworfen. In dem Ruhebereich können auch weitere Aggregate vorgesehen, sein, welche üblicherweise bei den Herstellungsprozessen verwendet werden. Derartige Aggregate können beispielsweise eine Etikettiereinheit, weitere Inspektionseinheiten, Druckereinheiten oder aber zwischengeschaltete Sternanordnungen, wie Transferstern, die den einzigen Zweck des Transportes erfüllen, etc. sein.

Eine Inspektion, bei welcher beispielsweise Strudel der Flüssigkeit durch die Rotation des Behältnisses noch vorherrschen, ist im Rahmen der Erfindung nicht gewünscht. Die vorliegende Erfindung eignet sich dabei insbesondere zur Erkennung von Schwebstoffen, die üblicherweise oberhalb der Flüssigkeit oder am Behältnisboden anliegen.

Es wird damit im Rahmen der vorliegenden Erfindung eine Vermengung der Fremdkörper mit dem Füllgut dadurch erreicht, dass das Gleichgewicht gestört wird. Es wird damit eine Schwebstofferkennung bereitgestellt, die es ermöglicht, sehr leichte Fremdkörper zu erkennen. Diese befinden sich normalerweise an der Oberfläche des Füllguts. Durch den Meniskus bzw. die Oberflächenspannung der Flüssigkeit sind diese Fremdkörper nur schwer zu erkennen. Daher werden diese erfindungsgemäß in eine entsprechende Position gebracht, in der eine Inspektion erfolgen kann. Dies wird, wie erwähnt durch eine Anregung von Außen auf den befüllten Behälter erreicht. Weiterhin ist es auch möglich, mit der erfindungsgemäßen Vorrichtung solche Fremdkörper zu inspizieren, die sich nicht an der Oberfläche des Füllguts befinden, sondern am Behältnisboden.

Es werden daher die Fremdkörper so angeregt, bzw. aus der stabilen Gleichgewichtsposition gebracht, dass einerseits die am Behältnisboden befindlichen Fremdkörper, wie z. B. Fliegen oder ähnliches, nach oben gelangen und die sich an der Oberfläche befindlichen Fremdkörper, wie beispielsweise Kunststoff, Folien, Dichtungen, Reiskörner oder ähnliches, nach unten gezogen bzw. gesogen werden. Auf diese Weise können diese dann innerhalb des Füllgutes schweben und von einer Inspektionseinrichtung erfasst werden.

Diese leichten Fremdstoffe bzw. Schwebstoffe werden daher erkannt, nachdem sich die Flüssigkeit bereits wieder in einem stabilen Gleichgewichtszustand befindet. Dabei wird insbesondere auf die physikalische Strömungseigenschaft der Flüssigkeit zurückgegriffen, wodurch eine wesentlich einfachere Handhabung möglich ist.

Vorzugsweise nimmt die Bildaufnahmeeinrichtung ein ortsaufgelöstes Bild des Behältnisses auf. Dabei kann es sich beispielsweise bei der Bildaufnahmeeinrichtung um eine CCD Kamera oder auch um eine Graustufenkamera handeln.

Die Transporteinrichtung transportiert die Behältnisse vorzugsweise vereinzelt. So ist es möglich, dass die Transporteinrichtung Greifeinrichtungen aufweist, um die individuellen Behältnisse zu greifen.

Bei der beschriebenen Inspektionseinrichtung kann es sich insbesondere um ein Inspektionsmodul handeln, welches auch bei bereits bestehenden Anlagen nachgerüstet werden kann. Vorzugsweise weist die Vorrichtung eine Ausleiteinrichtung auf, welche von der Inspektionseinrichtung als verunreinigt erkannte Behältnisse ausschleust.

Bei einer weiteren vorteilhaften Ausführungsform weist die Inspektionseinrichtung eine Beleuchtungseinrichtung auf, welche eine Seitenwandung der Behältnisse beleuchtet.

Besonders bevorzugt ist dabei diese Beleuchtungseinrichtung bezüglich des Transportpfades der Behältnisse gegenüber der ersten Bildaufnahmeeinrichtung angeordnet. So ist es möglich, dass die Behältnisse mittels der Beleuchtungseinrichtung durchleuchtet werden und anschließend bzw. gleichzeitig die Bildaufnahmeeinrichtung ein und bevorzugt mehrere Bilder Behältnisse aufnimmt. Die von der Beleuchtungseinrichtung beleuchteten Behältnisse werden damit von der Bildaufnahmeeinrichtung (insbesondere im Durchlichtverfahren) beobachtet.

Es wäre jedoch auch möglich, dass die Beleuchtungseinrichtung unter anderen Winkeln bezüglich der Behältnisse angeordnet ist, bzw. auf der gleichen Seite des Transportpfades wie die Bildaufnahmeeinrichtung selbst.

Bei einer weiteren vorteilhaften Ausführungsform weist die Inspektionseinrichtung eine zweite Bildaufnahmeeinrichtung auf, welche in der Transportrichtung der Behältnisse hinter der ersten Bildaufnahmeeinrichtung angeordnet ist, wobei die zweite Bildaufnahmeeinrichtung und die erste Bildaufnahmeeinrichtung sich bezüglich des Transportpfades der Behältnisse gegenüberliegen. Dies bedeutet, dass mit der ersten Bildaufnahmeeinrichtung beispielsweise eine Vorderseite der Behältnisse aufgenommen wird, und mit der zweiten Bildaufnahmeeinrichtung eine Rückseite. Dabei ist es auch möglich, dass eine weitere Beleuchtungseinrichtung vorgesehen ist, welche der besagten zweiten Bildaufnahmeeinrichtung zugeordnet ist. Auf diese Weise kann durch eine Kombination der beiden Bildaufnahmeeinrichtungen das Behältnis im Wesentlichen von allen Seiten aufgenommen werden, sodass auf diese Weise sicher Schwebstoffe erkannt werden können.

Bevorzugt ist die Bildaufnahmeeinrichtung derart gesteuert, dass sie von jedem Behältnis mehrere Bilder und insbesondere wenigstens drei Bilder aufnimmt, so dass das Behältnis unter drei verschiedenen Blickrichtungen aufgenommen wird.

Bei einer weiteren vorteilhaften Ausführungsform weist die Vorrichtung eine weitere Inspektionseinheit auf, welche in der Transportrichtung der Behältnisse vor und der Behältnisbewegungseinrichtung angeordnet ist. Dabei kann es sich beispielsweise um eine Inspektionseinrichtung handeln, welche bei Ruhen der Flüssigkeit insbesondere durch eine Seitenwanderkennung Störstoffe in dem Behältnis erkennt.

Weiterhin wäre es möglich, dass unmittelbar nach der Behältnisbewegungseinrichtung eine Inspektionseinrichtung vorgesehen ist, wie sie beispielsweise in der EP 1 570 256 B1 beschrieben wurde. Der Offenbarungsgehalt dieser Schrift wird hiermit durch Bezugnahme vollumfänglich zum Gegenstand auch der vorliegenden Offenbarung gemacht. Insbesondere durch eine Kombination der letztgenannten und aus der EP 1 570 256 B1 bekannten Inspektionseinrichtung und der hier beschriebenen Inspektionseinrichtung kann eine umfassende Überprüfung der in dem Behältnis vorgesehenen Flüssigkeit durchgeführt werden.

Vorteilhaft bewirkt die Behältnisbewegungseinrichtung eine Drehung der Behältnisse um ihre Längsachse. Auf diese Weise können in der Flüssigkeit Strudel erzeugt werden, welche beispielsweise sich auf der Oberfläche absetzende Schwebeteile hinab ziehen und/oder am Boden befindliche Schwebeteile aufschwemmen können. Insbesondere weist die Behältnisbewegungseinrichtung mehrere Drehköpfe auf, welche die Behältnisse um ihre eigene Längsachse drehen. Dabei können diese Drehköpfe beispielsweise an einem Karussell bzw. allgemein an einem Träger angeordnet sein, um auf diese Weise die Behältnisse zu drehen. Vorteilhafterweise sind die Behältnisse während dieses Vorgangs bereits mit einem Verschluss verschlossen.

Daneben wäre es jedoch auch möglich, dass die Behältnisse gerüttelt werden, wobei hierzu beispielsweise Ultraschallelemente, Piezoelemente, Hochfrequenzelemente und dergleichen Einsatz finden können. Auch durch diese Bewegung wäre es möglich, Schwebeteilchen von der Oberfläche bzw. vom Boden des Behältnisses fortzubewegen. Auch wäre es möglich, die Behältnisse in einer vorgegebenen Weise zu schwenken, beispielsweise die Behältnisse bezüglich ihrer Längsachse einmal um 360° zu drehen.

Alternativ zu dem Ausführungsbeispiel des Karussells sind auch Linearförderer denkbar.

Bei einer weiteren vorteilhaften Ausführungsform weist die Vorrichtung eine Behältnisdreheinrichtung auf, welche in der Transportrichtung der Behältnisse nach der ersten Inspektionseinrichtung angeordnet ist, und welche die Behältnisse um einen vorgegebenen Winkel bezüglich ihrer Längsachse dreht. So ist es beispielsweise möglich, dass die Behältnisdreheinrichtung die Behältnisse um 90° bezüglich ihrer Längsachse dreht, um auf diese Weise auch die restlichen Bereiche des Behältnisses ausleuchten zu können.

Bei einer weiteren vorteilhaften Ausführungsform ist die Bildaufnahmeeinrichtung derart ausgerichtet, dass sie Schwebstoffe aufnimmt, welche sich zwischen der Oberfläche der Flüssigkeit in dem Behältnis und dem Behältnisboden befinden.

Die vorliegende Erfindung ist weiterhin auf ein Verfahren zum Inspizieren von mit Flüssigkeit befüllten Behältnissen gerichtet, wobei die Behältnisse entlang eines vorgegebenen Transportpfades transportiert werden und wenigstens zeitweise mit einer Behältnisbewegungseinrichtung, zusätzlich zu der durch den Transport der Behältnisse verursachten Bewegung bewegt werden, um eine Bewegung der in dem Behältnis angeordneten Flüssigkeit zu erzeugen, wobei die Behältnisse mittels einer ersten Inspektionseinrichtung inspiziert werden, nachdem die Bewegung der Behältnisse durch die Behältnisbewegungseinrichtung beendet ist. Dabei beobachtet die Inspektionseinrichtung eine Wandung und insbesondere eine Seitenwandung mit einer ersten Bildaufnahmeeinrichtung. Bei der Bewegung der Flüssigkeit kann es sich um eine Relativbewegung der Flüssigkeit gegenüber dem Behältnis handeln. Vorzugsweise handelt es sich bei der Flüssigkeit um eine transparente Flüssigkeit.

Erfindungsgemäß werden die Behältnisse nach der Bewegung durch die Behältnisbewegungseinrichtung eine vorgegebene Transportstrecke transportiert, bevor sie mit der Inspektionseinrichtung inspiziert werden, sodass sich die Relativgeschwindigkeit der Flüssigkeit gegenüber dem Behältnis vermindert. Bevorzugt ruht die Flüssigkeit im Wesentlichen gegenüber dem Behältnis.

Die Behältnisbewegungseinrichtung dient im Gegensatz zu der Transporteinrichtung nicht primär einem Transportzweck der Behältnisse, sondern dazu, um die in dem Behältnis angeordnete Flüssigkeit in Bewegung zu setzen. Damit soll die Behältnisbewegungseinrichtung insbesondere auch eine Relativbewegung der in dem Behältnis befindlichen Flüssigkeit auch gegenüber der Transportbewegung der Behältnisse erzeugen.

Bei einem vorteilhaften Verfahren werden die Behältnisse mittels einer zweiten Inspektionseinrichtung inspiziert, welche in der Transportrichtung nach der Behältnisbewegungseinrichtung und vor der ersten Inspektionseinrichtung angeordnet ist. Vorzugsweise wird mittels dieser zweiten Inspektionseinrichtung eine Kontrolle, beispielsweise auf schwerere Gegenstände wie Glasscherben, in dem Behältnis durchgeführt.

Weitere Vorteile und Ausführungsformen ergeben sich aus den beigefügten Zeichnungen:

Darin zeigen:
- Fig. 1: eine schematische Darstellung einer Inspektionseinheit zum Inspizieren von Behältnissen;
- Fig. 2: eine schematische Darstellung einer Anlage, welche mehrere Inspektions-einrichtungen zum Inspizieren von Behältnissen aufweist;
- Fig. 3: zwei Darstellungen von Behältnissen zur Veranschaulichung des der Erfindung zugrunde liegenden Problems;
- Fig. 4: eine schematische Darstellung zur Veranschaulichung der erfindungsgemäßen Lösung;
- Fig. 5a bis 5c: drei Darstellungen zur Veranschaulichung der erfindungsgemäßen Vorgehensweise;
- Fig. 6: eine grobschematische Darstellung einer erfindungsgemäßen Anlage;
- Fig. 7: eine schematische Darstellung zur Veranschaulichung einer Bodeninspektion der Behältnisse;
- Fig. 8: eine schematische Darstellung einer erfindungsgemäßen Vorrichtung;
- Fig. 9: drei Darstellungen verschiedener Ausführungsformen einer erfindungsgemäßen Inspektionseinrichtung;
- Fig. 10: eine weitere schematische Darstellung einer Vorrichtung zum Inspizieren von Behältnissen;
- Fig. 11: eine detailliertere Darstellung einer erfindungsgemäßen Vorrichtung zum Inspizieren von Behältnissen; und
- Fig. 12: eine Darstellung zu einem erfindungsgemäßen Inspektionsverfahren.

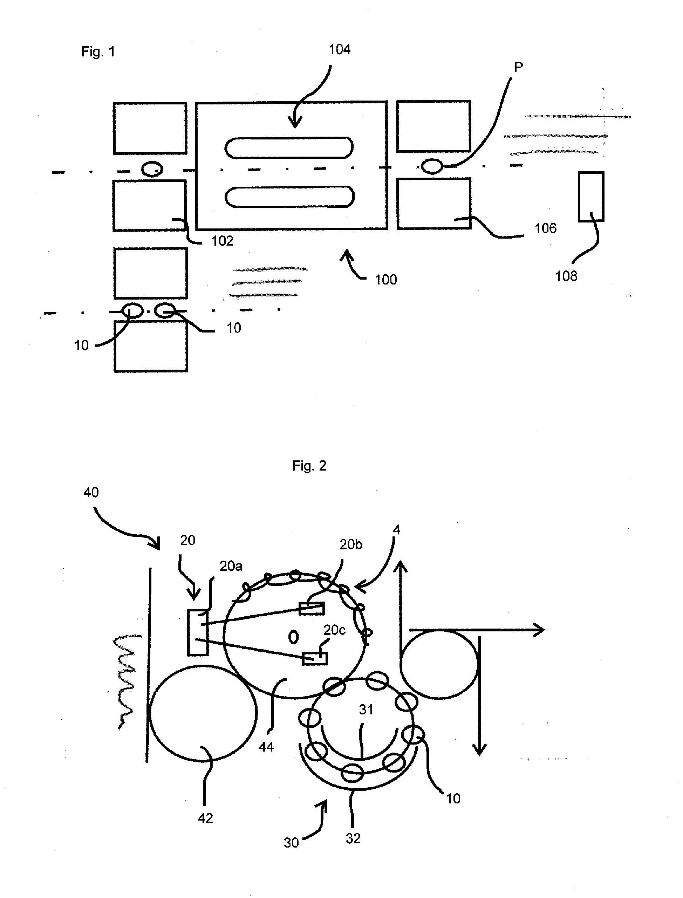

Fig. 1 zeigt eine stark schematische Darstellung einer Vorrichtung zum Inspizieren von Behältnissen 100. Dabei bezieht sich das Bezugszeichen 10 auf ein Behältnis, welches entlang eines (gestrichelt dargestellten) Transportpfades P transportiert wird. In einer ersten Inspektionseinheit 102 wird das Behältnis seitlich beobachtet, wobei sich diese Inspektionseinheit 102 aus einer Kamera und einer Beleuchtungseinrichtung zusammensetzt. Über ein Drehmittel 104 werden die Behältnisse anschließend um einen Winkel, beispielsweise um 90° gedreht, und anschließend von einer Seiteninspektionseinheit 106 wieder beobachtet. Das Bezugszeichen 108 bezieht sich auf eine Ausschleuseinheit, welche beispielsweise fehlerhafte Behältnisse ausschleusen kann. Das untere Teilbild in Fig. 1 zeigt eine weitere mögliche Inspektionsanordnung, wobei hier zwei hintereinander transportierte Behältnisse 10 inspiziert werden. Die Behältnisse können jedoch auch mittels eines Trägers, beispielsweise entlang eines kreisförmigen Transportpfades transportiert werden.

Fig. 2 zeigt grob schematisch eine Darstellung einer erfindungsgemäßen Anlage 40 zum Inspizieren von Behältnissen 40. Dabei ist hier ein Zuführrad 42 vorgesehen, welches die Behältnisse (beispielsweise von einer nicht näher dargestellten) Einteilsschnecke übernimmt und an ein erstes Inspektionsrad 44 übergibt. Das Bezugszeichen 20 kennzeichnet eine erste Inspektionseinrichtung, welche beispielsweise eine Seitenwanderkennung der Behältnisse vornimmt. Dabei ist hier eine Beleuchtungseinrichtung 20a vorgesehen, sowie zwei Kameras 20b und 20c. Auf diese Weise werden hier die Behältnisse durch Lichtverfahren beobachtet. Das Bezugszeichen 4 bezieht sich grob schematisch auf eine Behältnisbewegungseinrichtung, welche hier die Behältnisse in Rotation versetzt. Das Bezugszeichen 30 kennzeichnet eine weitere Inspektionseinrichtung, bei der ebenfalls die Flüssigkeit beobachtet wird. Bei dieser Vorrichtung sind zwei seitliche Beleuchtungseinrichtung 31 und 32 vorgesehen, welche die Seitenwandungen des Behältnisses durchleuchten. Eine Kameraeinrichtung kann unterhalb der jeweiligen Behältnisse angeordnet sein.

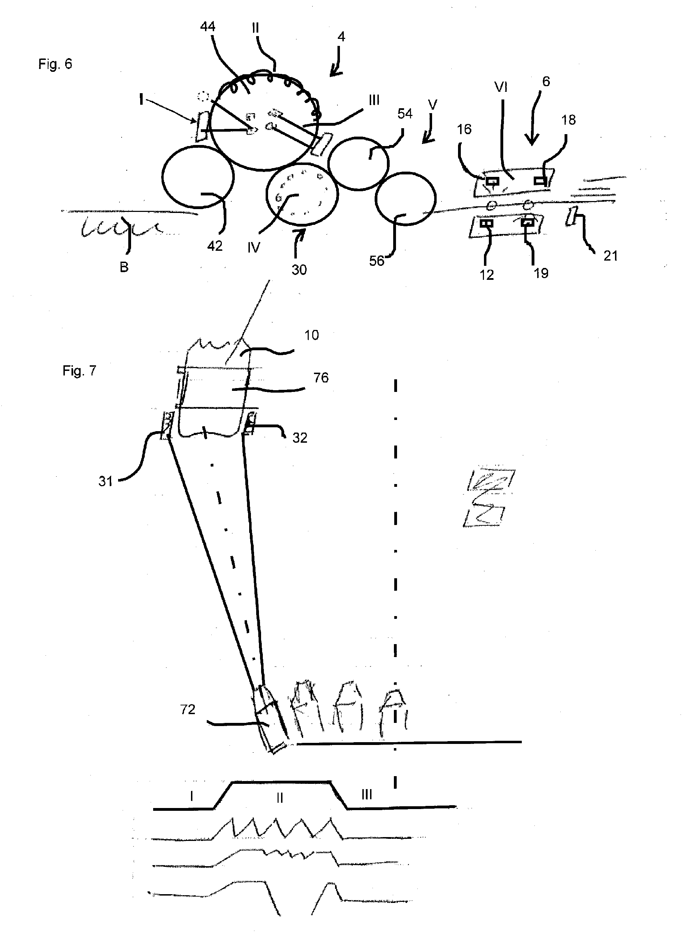

Es wäre auch denkbar, bei der in Fig. 2 gezeigten Ausführungsform auf eine Einteilschnecke zu verzichten. Bevorzugt ist zwischen den beiden Inspektionseinrichtungen 20 und 6 (vgl. Fig. 6) die Inspektionseinrichtung 30 angeordnet, welche Fremdkörper wie Glassplitter erkennen kann und welche in der EP 1 570 256 B1 beschrieben wurde.

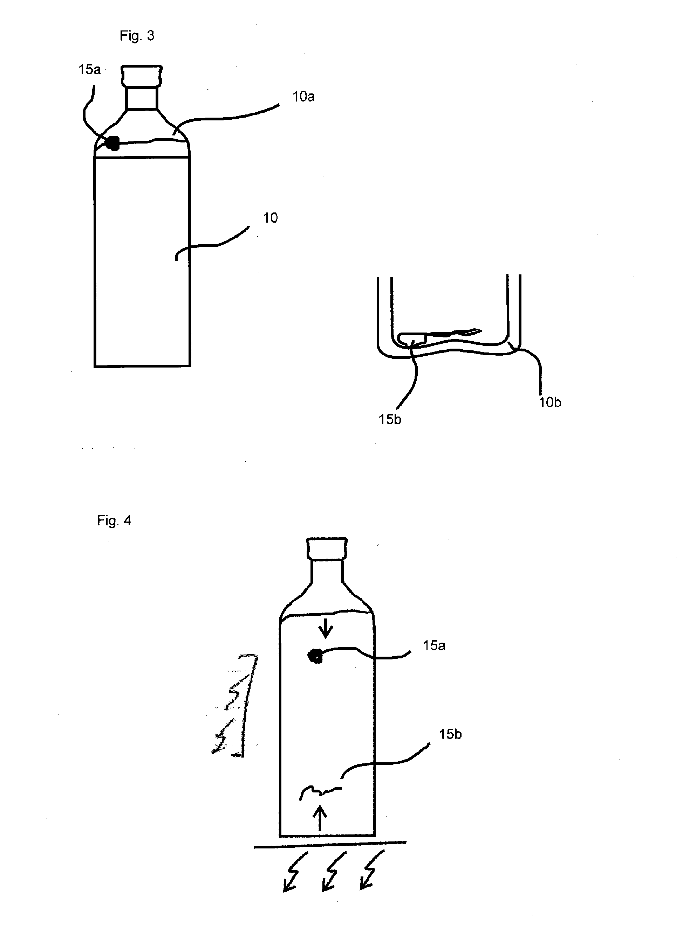

In Fig. 3 sind zwei Teilbilder eines Behältnisses 10 gezeigt, welche jeweils Fremdkörper 15a und 15b aufweisen. Bei dem Fremdkörper 15a handelt es sich um einen solchen Fremdkörper, der leicht ist und daher auf der Flüssigkeitsoberfläche 10a innerhalb des Behältnisses schwimmt. Dieser Fremdkörper ist relativ schwer zu detektieren, da er sich optisch oftmals nur ungenügend von der Flüssigkeitsoberfläche abhebt.

Bei dem Fremdkörper 15b handelt es sich um einen Fremdkörper, der an dem Behältnisboden anliegt und daher ebenfalls nur schwer zu erfassen ist.

Fig. 4 zeigt grob schematisch dass durch eine Relativbewegung des Behältnisses bezüglich der Flüssigkeit die Möglichkeit besteht, den Fremdkörper 15b vom Behältnisboden anzuheben und andererseits den leichten Fremdkörper 15a unter die Flüssigkeitsoberfläche zu ziehen. In der in Fig. 4 gezeigten Situation sind die Fremdkörper optisch leichter erfassbar.

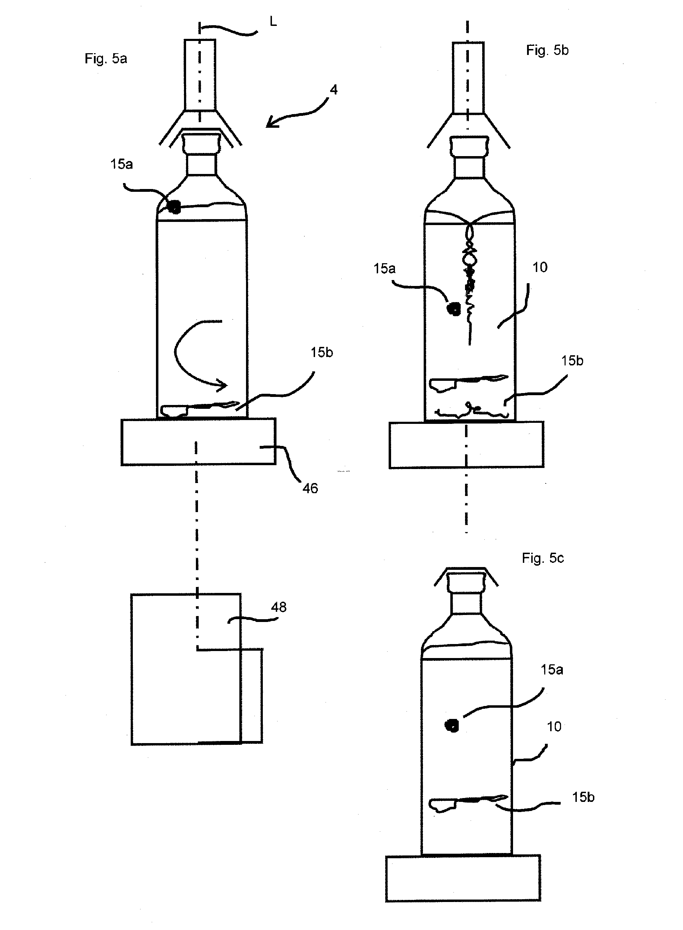

Die Fig. 5a bis 5c veranschaulichen die Vorgehensweise des erfindungsgemäßen Verfahrens. Dabei ist eine insgesamt mit 4 bezeichnete Behältnisbewegungseinrichtung vorgesehen, welche die Behältnisse bezüglich ihrer Längsachse L dreht. Die Drehung kann dabei so bewirkt werden, dass von einem Motor 48 ein Drehteller 46, auf dem das Behältnis steht, gedreht wird.

Bei der in Fig. 5b gezeigten Darstellung hat sich im inneren der Flüssigkeit ein Strudel gebildet, der einerseits bewirkt, dass der Fremdkörper 15a nach unten gezogen wird und der andererseits bewirkt, dass der Fremdkörper 15b angehoben bzw. aufgeschwemmt wird.

Bei der in Fig. 5c gezeigten Situation hat sich die Bewegung der Flüssigkeit gegenüber dem Behältnis 10 wieder beruhigt, gleichwohl sind jedoch die beiden Fremdkörper 15a und 15b noch nicht wieder an die Flüssigkeitsoberfläche bzw. an dem Behältnisboden aufgestiegen, bzw. abgesunken und daher immer noch optisch erfassbar. Es ist insoweit vorteilhaft, dass die Flüssigkeit innerhalb des Behältnisses zumindest weitgehend ruht, damit die optische Überprüfung auf die Fremdkörper 15a und 15b nicht durch weitere Störkörper, wie beispielsweise Luftblasen, Sprudel etc. beeinträchtigt/gestört werden, welche sich mit der Flüssigkeit mit bewegen. Die Fremdkörper 15a und 15b bewegen sich bzw. schweben innerhalb der zu inspizierenden Flüssigkeit.

Durch das in Bewegung setzen des Behälters werden damit die Fremdkörper 15a und 15b in der Flüssigkeit wandern, sich senken, bzw. aufschwemmen.

Fig. 6 zeigt eine weitere schematische Darstellung der vorliegenden Erfindung. Hier sind einige Inspektionsbereiche I bis VI dargestellt. Bereits in einem Einlaufbereich B mit Einlaufschnecke und/oder Zuführstern 42 können solche Behältnisse ausgeleitet werden, die beispielsweise nicht verschlossen oder nicht korrekt verschlossen sind. Das Bezugszeichen I bezieht sich auf eine Durchleuchtstation, welche die Behältnisse durchleuchtet, bevor diese in Eigenrotation versetzt werden. Die Beleuchtungseinrichtung kann anders als in der Figur dargestellt, auch mehr als eine Beleuchtungsquelle aufweisen. Weiterhin kann sich dieser Inspektionsbereich auf eine Behälterinspektion (außenumfangsseitig) beziehen. Das Bezugszeichen 44 kennzeichnet ein Inspektionsrad.

In dem Bereich II werden die Behälter wie angedeutet in Eigendrehung um ihre Längsrichtung versetzt. Die Drehzahl kann dabei je nach Behältergeometrie und dem abgefüllten Produkt variieren und liegt vorzugsweise in einem Bereich zwischen 200 und 1200 U/min, bevorzugt zwischen 400 und 1000 U/min und besonders bevorzugt zwischen 600 und 800 U/min. Insbesondere unmittelbar an diese Station in der die Behältnisse in Drehung versetzt werden, kann eine weitere Durchleuchtstation III angeordnet sein, die die Behältnisse aufnimmt, während sich die Flüssigkeit noch weiter dreht. Dadurch können beispielsweise sehr leichte Schwebstoffe, wie Styropor erkannt werden, Auch ist es denkbar an dieser Position die den Behälter außenumfangsseitig zu inspizieren.

Der Bereich IV bezieht sich auf eine weitere auch in Fig. 2 dargestellte Inspektionseinheit 30. Diese Station IV dient dazu, um am Boden des Behältnisses liegende sich abrollende Fremdkörper zu erkennen. Hierzu werden die Behältnisse seitlich beleuchtet und von unten betrachtet. Auf diese Weise ist es beispielsweise möglich, durch Vergleich mehrerer Bilder Fremdobjekte innerhalb der Flüssigkeiten wie beispielsweise Glasscherben zu erfassen. Weiterhin kann in diesem Inspektionsbereich eine Fremdstofferkennung für schwerere Materialien, beispielsweise Metallen, integriert sein.

Das Bezugszeichen V bezieht sich auf einen Maschinenauslaufbereich, der hier die beiden Transfersterne 54 und 56 umfasst. Hier wäre es beispielsweise möglich, fehlerhafte Behältnisse auszuleiten oder auch zu anderen Zwecken die Maschine leer zu fahren.

Der Bereich VI bezieht sich auf einen Durchleuchtbereich wie beispielsweise eine Seitenwandinspektion. Hier kann es sich bei der Kamera 12 und gegebenenfalls auch bei der Kamera 18 um eine einfache schwarzweiß oder auch eine Fullfront-Schwarzweißkamera handeln. Auch könnten CCD- oder Farbbildkameras verwendet werden. Daneben kann auch eine Rotation der Behältnisse um ihre eigene Längsachse (z. B. um 90°) vorgenommen werden.

Die einzelnen Inspektionsbereiche bzw. -stationen I-VI sind dabei beliebig kombinierbar und auch die jeweiligen Bildauswertungen können miteinander verglichen werden, um in besonders günstiger Weise Fremdkörper festzustellen. Vorzugsweise sind die einzelnen Inspektionsstationen modular aufgebaut und insbesondere auch an bestehenden Anlagen nachrüstbar.

Das Bezugszeichen 21 bezieht sich wiederum auf eine Auswurfeinrichtung bzw. Ausleiteinrichtung, die beispielsweise fehlerhafte Behältnisse aus dem Behältnisstrom ausschleusen kann.

Weiterhin wäre es auch möglich, im Bereich der Station VI unterschiedliche Verfahren anzuwenden. So wäre es möglich, optisch mit einer bis beispielsweise acht Kameras sternförmig zu beobachten, wobei auch eine Anordnung der einzelnen Bildaufnahmeeinrichtungen 12 übereinander möglich ist. Die einzelnen Beleuchtungseinrichtungen können dabei beispielsweise Leuchtquellen wie LEDs aufweisen, und auch in unterschiedlichen Farben wie beispielsweise roter Farbe beleuchten. Daneben wäre auch eine Beleuchtung durch UV-Licht, grünes Licht, IR-Licht, Weißlicht, blaues Licht und deren Kombination möglich. Vorteilhaft werden die Beleuchtungseinrichtungen 16 und 19 gepulst betrieben. Daher sind auch Positionserfassungseinrichtungen (nicht dargestellt) vorgesehen, die hier die Positionen der einzelnen Behältnisse erfassen und die Beleuchtungseinrichtung und bevorzugt auch die Kameras in Reaktion auf die Position der Behältnisse triggern.

Die einzelnen Farben der Leuchtquellen können sich dabei nach der Behälterfarbe oder der Produktbeschaffenheit richten.

Alternative Bildaufnahme- und Beleuchtungseinrichtungen können auch mittels IR-Lichtabsorbtionsmessung arbeiten, welche beispielsweise als Punkt oder Zeilensensor ausgebildet ist. Daneben ist auch eine Kombination mit Röntgenlicht bzw. Röntgentechnik möglich.

Fig. 7 zeigt eine Darstellung der Inspektion, wie sie in dem Bereich IV vorgenommen wird. Dabei beziehen sich die Bezugszeichen 31 und 32 wiederum auf die seitlichen Beleuchtungen, welche einen Bodenbereich des Behältnisses 10 beleuchten. Die Behältnisse werden hier mit einer Greifeinrichtung 76 geführt, d. h. sie werden bodenfrei geführt. Das Bezugszeichen 72 kennzeichnet hier wieder Bildaufnahmeeinrichtungen, welche die Behältnisse von unten beobachten. Aus dem unterhalb dargestellten Diagramm ergibt sich, dass diese Messung in einem Arbeitsbereich vorgenommen wird, in dem die Flüssigkeit in dem Behältnis noch gegenüber der Behältniswandung in Bewegung ist.

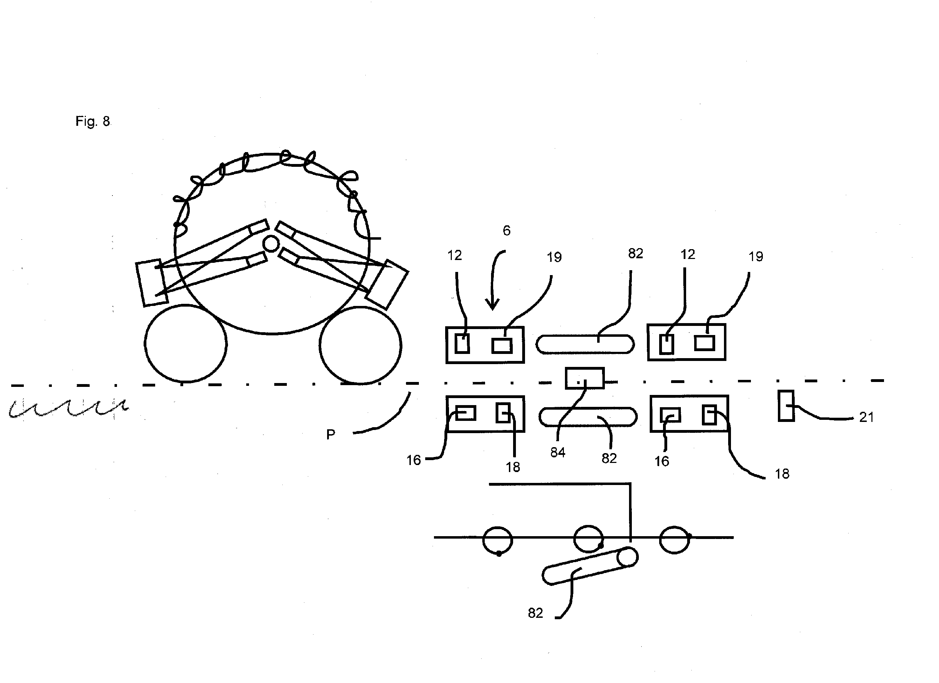

Fig. 8 zeigt eine Darstellung zur Veranschaulichung der erfindungsgemäßen Vorrichtung. Auch hier ist wieder der Bereich entlang des Transportpfades P dargestellt, in dem die Behältnisse in Drehung versetzt werden. An diesem Bereich schließt sich die erste Inspektionseinrichtung an, wobei diese erste Inspektionseinrichtung eine erste Bildaufnahmeeinrichtung 12 aufweist, sowie eine dieser ersten Bildaufnahmeeinrichtung 12 gegenüberliegende Beleuchtungseinrichtung 16, welche die Behältnisse beleuchtet, um auf diese Weise Schwebstoffe zu erkennen.

Eine zweite Bildaufnahmeeinrichtung 18 schließt sich hier entlang des Transportpfades P an, wobei hier diese Bildaufnahmeeinrichtung 18 bezüglich des Transportpfades P (schräg) gegenüber der ersten Bilaufnahmeeinrichtung 12 angeordnet ist. Das Bezugszeichen 19 bezieht sich auf eine Beleuchtungseinrichtung um die Behältnisse wieder (von hinten) zu beleuchten. Die Behältnisse werden bei dieser Ausgestaltung mittels eines (nicht gezeigten) Transportbandes transportiert.

Das Bezugszeichen 82 bezieht sich auf eine weitere Transporteinrichtung, mit der die Behältnisse hier an ihrer Seitenwandung kontaktiert werden. Auf diese Weise ist es möglich, die Behältnisse bodenfrei zu transportieren, sodass unterhalb des Transportpfades eine weitere Inspektionseinrichtung 84 wie eine Bildaufnahmeeinrichtung angeordnet sein kann. Weiterhin können die Seitenbänder 82 auch mit einer Relativgeschwindigkeit zueinander bewegt werden, sodass die Behältnisse nicht nur transportiert, sondern auch um einen vorgegebenen Winkel, beispielsweise um 90° gedreht werden. Damit handelt es sich bei der Transporteinrichtung 82 um zwei Riemenpaare, mit denen die Behältnisse transportiert aber auch gedreht werden können.

In der unteren Darstellung ist ein leicht schräggestelltes (nicht gezeigtes) Band vorgesehen, welches hier eine Drehung der Behältnisse um ihre Längsachse bewirken kann. Dabei ist eine Drehung sowohl in einer positiven, als auch in einer negativen Richtung (mit oder entgegen dem Uhrzeigersinn) denkbar. Die Parametrierung hierzu ist behältersortenabhängig.

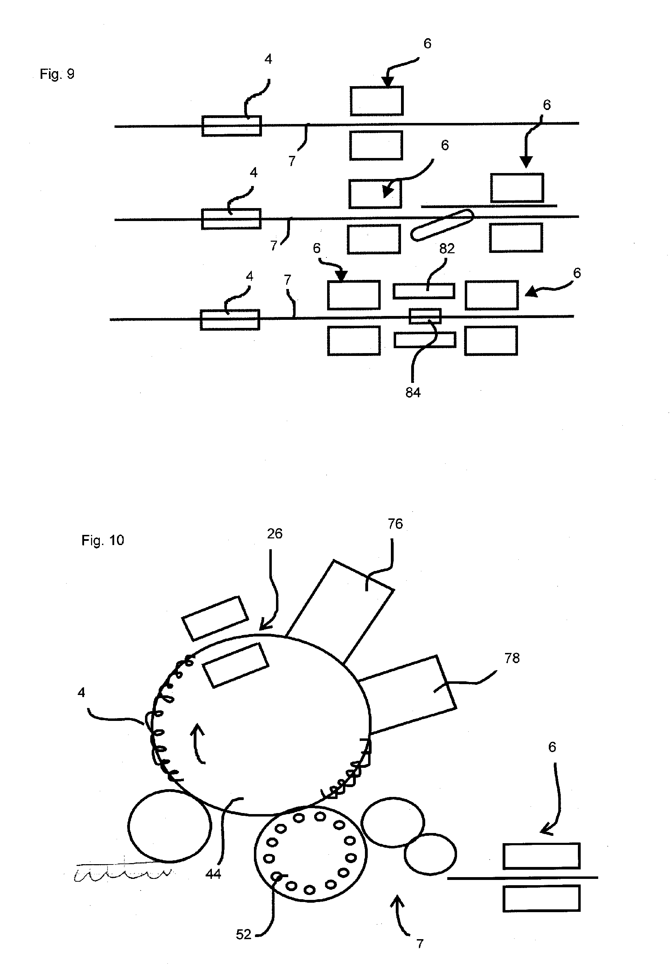

Fig. 9 zeigt weitere Ausführungsmöglichkeiten für eine erfindungsgemäße Vorrichtung. Bei dem oberen Teilbild ist nach der Behältnisbewegungseinrichtung 4 zunächst ein Ruhebereich 7 vorgesehen, entlang dessen die Behältnisse lediglich transportiert werden, aber zusätzlich nicht in anderer Weise bewegt, beispielsweise gedreht werden. An diesen Ruhebereich 7 schließt sich die Inspektionseinrichtung 6 an.

Bei dem mittleren Teilbild ist ebenfalls eine Behältnisbewegungsstation 4, sowie der Ruhebereich 7 vorgesehen, dann allerdings nach der ersten Inspektionseinrichtung eine Dreheinheit welche die Behältnisse um 90° dreht.

Bei dem unteren Teilbild ist zusätzlich, wie auch bereits in Fig. 8 veranschaulicht, eine Inspektionseinrichtung 84 zur Bodenkontrolle vorgesehen.

Fig. 10 zeigt eine weitere Ausgestaltung einer erfindungsgemäßen Vorrichtung. Auch hier ist vorgesehen, dass die Behältnisse mittels einer Behältnisbewegungseinrichtung hier in Rotation versetzt werden und anschließend mit einer Inspektionseinrichtung 26 inspiziert werden. In diesem Bereich kann auch eine Ausrichtung der Behälter stattfinden.

Hieran schließt sich eine weitere Fremdkörperdetektion 77 an, welche auch mit einer Behältnisetikettiereinrichtung 78 kombiniert sein kann. Dies bedeutet, dass es bereits in diesem Bereich möglich wäre, die Behältnisse mit Etiketten zu versehen.

Dabei können die Behältnisse auch während des Etikettiervorgangs gedreht werden, wie in Fig. 10 angedeutet.

Die Inspektionseinrichtung 52 und die Inspektionseinrichtung 6 sind ausgestaltet wie oben erläutert.

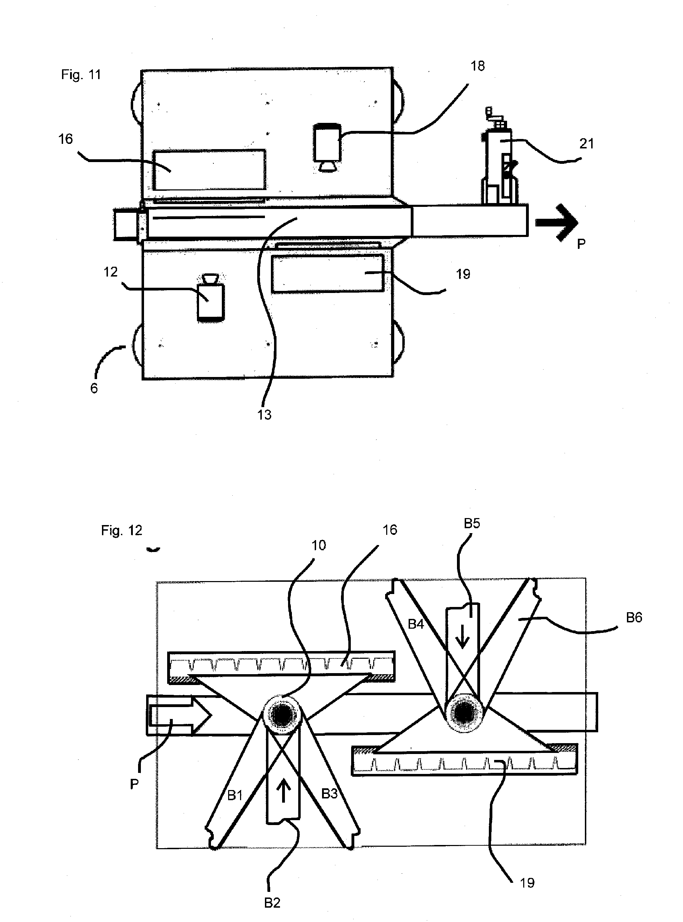

Fig. 11 zeigt eine detaillierte Darstellung einer Inspektionseinrichtung 6. Dabei ist ein Transportband 13 vorgesehen, auf dem die (nicht gezeigten) Behältnisse stehend angeordnet sind. Zunächst passieren die Behältnisse eine erste Bildaufnahmeeinrichtung 12 sowie eine dieser gegenüberliegenden Beleuchtungseinrichtung 16. Die von der Beleuchtungseinrichtung 16 durchleuchteten gefüllten Behältnisse werden von der Bildaufnahmeeinrichtung 12 aufgenommen. Anschließend passieren die Behältnisse eine zweite Bildaufnahmeeinrichtung 18, sowie eine dieser bezüglich des Transportpfades P gegenüber angeordnete Beleuchtungseinrichtung 19. Durch das Zusammenwirken dieser beiden Bildaufnahmeeinrichtungen 12 und 18 kann das Behältnis von zwei gegenüberliegenden Seiten betrachtet werden, ohne dabei gedreht werden zu müssen.

Weiterhin kann auf diese Weise eine Berührung der Behältnisse (d.h. insbesondere deren Seitenwand) vermieden werden, d.h. die Inspektion findet berührungslos statt. Auch kann der mechanische Verschleiß der Anlage so reduziert werden und die Anschaffungskosten für die Anlage verringern sich. Das Bezugszeichen 21 kennzeichnet wieder eine Ausleitvorrichtung zum Ausleiten als fehlerhaft erkannter Behältnisse. Durch die hier gezeigte Anordnung kann auch die Umrüstzeit verringert werden, da die Anlage in der gezeigten Ausführungsform auch für unterschiedliche Behältnisgeometrien geeignet ist.

Fig. 12 veranschaulicht eine vorteilhafte Vorgehensweise bei der Inspektion der Behältnisse 10. Dabei werden die einzelnen Behältnisse von den beiden (nicht gezeigten) Bildaufnahmeeinrichtungen bzw. Kameras jeweils unter der unterschiedlichen Beobachtungspfaden B1 - B6,aufgenommen. Auf diese Weise können insgesamt 6 Ansichten des gleichen Behältnisses aufgenommen werden. Zu dem in Fig. 12 gezeigten Zeitpunkt erfolgt gerade jeweils die Beobachtung entlang des Beobachtungspfades B2. Die Aufnahme des Behältnisses unter dem Beobachtungspfad B3 findet zu einem etwas früheren Zeitpunkt statt und die Beobachtung unter dem Beobachtungspfad B1 zu einem etwas späteren Zeitpunkt. Es ist jedoch auch eine gleichzeitige Beobachtung entlang der Beobachtungspfade B1-B3 bzw. B4 - B6 denkbar. Es wäre so denkbar, dass durch den Einsatz geeigneter Spiegel die jeweiligen Bilder im Wesentlichen gleichzeitig aufgenommen werden und ein eventueller zeitlicher Versatz lediglich durch die elektronische Bildverarbeitung auftritt. Es wäre jedoch auch denkbar, mehrere Kameras einzusetzen. Die Beobachtung entlang der Pfade B1 - B3 einerseits und entlang der Pfade B4 - B6 andererseits sind jedoch bezogen auf ein bestimmtes Behältnis zueinander zeitlich versetzt. Es werden also hier nicht zwingend, wie ggfs. aus der Figur 12 abgeleitet werden könnte, mittels 6 Kameras die Bilder der Behältnisse aufgenommen, sondern es sind nur zwei Bildaufnahmeeinrichtungen vorgesehen, welche jedoch jeweils zeitlich versetzt die Aufnahmen bzgl. der Bildaufnahmepfade B1, B2, B3 machen. Kamerastellungen unterschiedlicher Arten sind genauso möglich. In jedem Fall ist zumindest die Beobachtung entlang eines Beobachtungspfades erforderlich.

Eine Beleuchtung der Behältnisse erfolgt hier mittels LED - Blitzlicht. Der Abstand zwischen den einzelnen Behältnissen liegt hier bei ca. 20% des Behältnisdurchmessers, es wären jedoch auch größere Abstände denkbar. Auf diese Weise kann, wie oben dargestellt, eine Erkennung von schwebenden Fremdgegenständen vorgenommen werden. Die Beleuchtungseinrichtungen 16 und 19 weisen daher eine derartige Länge entlang des Transportpfades P auf, dass die Behältnisse 10 an unterschiedlichen Positionen des Pfades ausreichend beleuchtet werden können.

Die Anmelderin behält sich vor, sämtliche in den Anmeldungsunterlagen offenbarte Merkmale als erfindungsmäßig zu beanspruchen, sofern sie einzeln oder in Kombination gegenüber dem Stand der Technik neu sind.

### Bezugszeichenliste

- 4: Behältnisbewegungseinrichtung
- 6: Inspektionseinrichtung
- 7: Ruhebereich
- 10: Behältnis
- 10a: Flüssigkeitsoberfläche
- 12, 18: Kamera
- 13: Transportband
- 15a, 15b: Fremdkörper
- 16, 19: Beleuchtungseinrichtung
- 20: erste Inspektionseinrichtung
- 20a: Beleuchtungseinrichtung
- 20b, 20c: Kameras
- 21: Auswurfeinrichtung
- 26: Inspektionseinrichtung
- 30: weitere Inspektionseinrichtung
- 31, 32: Beleuchtungseinrichtung
- 40: Anlage
- 42: Zuführrad
- 44: Inspektionsrad
- 46: Drehteller
- 48: Motor
- 52: Inspektionseinrichtung
- 54, 56: Transfersterne
- 72: Bildaufnahmeeinrichtung
- 76: Greifeinrichtung
- 77: Fremdkörperdetektion
- 78: Behältnisetikettiereinrichtung
- 82: weitere Transporteinrichtung, Seitenbänder
- 84: Bildaufnahmeeinrichtung, Inspektionseinrichtung
- 100: Vorrichtung zum Inspizieren von Behältnissen
- 102: Inspektionseinheit
- 104: Drehmittel
- 106: Seiteninspektionseinheit
- 108: Ausschleuseinheit
- B: Einlaufbereich/Einlaufschnecke
- B1, B2, B3: Beobachtungspfade
- B4, B5, B6: Beobachtungspfade
- P: Transportpfad
- L: Längsachse
- I-VI: Inspektionsbereiche

## Patentansprüche

1. Vorrichtung (1) zum Inspizieren von mit Flüssigkeit befüllten Behältnissen (1) mit einer Transporteinrichtung, welche die Behältnisse (10) entlang eines vorgegebenen Transportpfades (P) transportiert, mit einer Behältnisbewegungseinrichtung (4), welche die Behältnisse zusätzlich zu der durch den Transport der Behältnisse (10) verursachten Bewegung bewegt, um eine Bewegung der in dem Behältnis angeordneten Flüssigkeit zu erzeugen, wobei die Vorrichtung eine in der Transportrichtung der Behältnisse (10) nach der Behältnisbewegungseinrichtung (4) angeordnete Inspektionseinrichtung (6) aufweist, und die Inspektionseinrichtung (6) eine erste Bildaufnahmeeinrichtung (12) aufweist, welche insbesondere eine Seitenwandung der Behältnisse (10) beobachtet,
**dadurch gekennzeichnet, dass**
zwischen der Behältnisbewegungseinrichtung (4) und der Inspektionseinrichtung (6) ein Ruhebereich (7) angeordnet ist, in dem die Behältnisse transportiert werden.

2. Vorrichtung nach Anspruch 1,
**dadurch gekennzeichnet, dass**
die Inspektionseinrichtung (6) eine Beleuchtungseinrichtung (16) aufweist, welche eine Seitenwandung der Behältnisse (10) beleuchtet.

3. Vorrichtung nach Anspruch 2,
**dadurch gekennzeichnet, dass**
die Beleuchtungseinrichtung (16) bezüglich des Transportpfades (P) der Behältnisse (10) gegenüber der ersten Bildaufnahmeeinrichtung (12) angeordnet ist.

4. Vorrichtung nach wenigstens einem der vorangegangenen Ansprüche,
**dadurch gekennzeichnet, dass**
die Inspektionseinrichtung (6) eine zweite Bildaufnahmeeinrichtung (18) aufweist, welche in der Transportrichtung der Behältnisse (10) hinter der ersten Bildaufnahmeeinrichtung (12) angeordnet ist, wobei die zweite Bildaufnahmeeinrichtung (18) und die erste Bildaufnahmeeinrichtung (12) sich bezüglich des Transportpfades der Behältnisse gegenüberliegen.

5. Vorrichtung (1) nach wenigstens einem der vorangegangenen Ansprüche,
**dadurch gekennzeichnet, dass**
die Behältnisbewegungseinrichtung (4) eine Drehung der Behältnisse (10) um ihre Längsachse bewirkt

6. Vorrichtung (1) nach wenigstens einem der vorangegangenen Ansprüche,
**dadurch gekennzeichnet, dass**
die Behältnisbewegungseinrichtung (4) eine Schwingungserzeugungseinheit aufweist, welche die Behältnisse (10) in eine schwingende Bewegung versetzt.

7. Vorrichtung (1) nach wenigstens einem der vorangegangenen Ansprüche,
**dadurch gekennzeichnet, dass**
die Vorrichtung (1) eine Behältnisdreheinrichtung (82, 84) aufweist, welche in der Transportrichtung der Behältnisse (10) nach der Inspektionseinrichtung (6) angeordnet ist und welche die Behältnisse um einen vorgegebenen Winkel bezüglich ihrer Längsachse dreht.

8. Vorrichtung (1) nach wenigstens einem der vorangegangenen Ansprüche,
**dadurch gekennzeichnet, dass**
die Bildaufnahmeeinrichtung (12) derart ausgerichtet ist, dass sie Schwebstoffe aufnimmt, welche sich zwischen einer Oberfläche der Flüssigkeit in dem Behältnis (10) und dem Behältnisboden befinden.

9. Verfahren zum Inspizieren von mit Flüssigkeit befüllten Behältnissen (10), wobei die Behältnisse (10) entlang eines vorgegebenen Transportpfades transportiert werden und wenigstens zeitweise mit einer Behältnisbewegungseinrichtung (4) zusätzlich zu der durch den Transport der Behältnisse (10) verursachten Bewegung bewegt werden, um eine Bewegung der in dem Behältnis angeordneten Flüssigkeit zu erzeugen, wobei die Behältnisse (10) mittels einer ersten Inspektionseinrichtung (6) inspiziert werden, nach dem die Bewegung der Behältnisse (10) durch die Behältnisbewegungseinrichtung (4) beendet ist , und die erste Inspektionseinrichtung (6) mit einer ersten Bildaufnahmeeinrichtung (12) eine Seitenwandung der Behältnisse (10) beobachtet,
**dadurch gekennzeichnet, dass**
die Behältnisse (10) nach der Bewegung durch die Behältnisbewegungseinrichtung (4) eine vorgegebene Transportstrecke transportiert werden, bevor sie mit der Inspektionseinrichtung (6) inspiziert werden, so dass sich die Relativgeschwindigkeit der Flüssigkeit gegenüber dem Behältnis vermindert.

10. Verfahren nach Anspruch 9,
**dadurch gekennzeichnet, dass**
die Behältnisse (10) mittels einer zweiten Inspektionseinrichtung inspiziert werden, welche in der Transportrichtung nach der Behältnisbewegungseinrichtung (4) und vor der ersten Inspektionseinrichtung (6) angeordnet ist.

## Geänderte Patentansprüche

### Geänderte Patentansprüche gemäss Regel 137(2) EPÜ.

**1.** Vorrichtung (1) zum Inspizieren von mit Flüssigkeit befüllten Behältnissen (1) mit einer Transporteinrichtung, welche die Behältnisse (10) entlang eines vorgegebenen Transportpfades (P) transportiert, mit einer Behältnisbewegungseinrichtung (4), welche die Behältnisse zusätzlich zu der durch den Transport der Behältnisse (10) verursachten Bewegung bewegt, um eine Bewegung der in dem Behältnis angeordneten Flüssigkeit zu erzeugen, wobei die Vorrichtung eine in der Transportrichtung der Behältnisse (10) nach der Behältnisbewegungseinrichtung (4) angeordnete Inspektionseinrichtung (6) aufweist, und die Inspektionseinrichtung (6) eine erste Bildaufnahmeeinrichtung (12) aufweist, welche eine Seitenwandung der Behältnisse (10) beobachtet,
**dadurch gekennzeichnet, dass**
zwischen der Behältnisbewegungseinrichtung (4) und der Inspektionseinrichtung (6) ein Ruhebereich (7) angeordnet ist, in dem die Behältnisse transportiert werden.

**2.** Vorrichtung nach Anspruch 1,
**dadurch gekennzeichnet, dass**
die Inspektionseinrichtung (6) eine Beleuchtungseinrichtung (16) aufweist, welche eine Seitenwandung der Behältnisse (10) beleuchtet.

**3.** Vorrichtung nach Anspruch 2,
**dadurch gekennzeichnet, dass**
die Beleuchtungseinrichtung (16) bezüglich des Transportpfades (P) der Behältnisse (10) gegenüber der ersten Bildaufnahmeeinrichtung (12) angeordnet ist.

**4.** Vorrichtung nach wenigstens einem der vorangegangenen Ansprüche,
**dadurch gekennzeichnet, dass**
die Inspektionseinrichtung (6) eine zweite Bildaufnahmeeinrichtung (18) aufweist, weiche in der Transportrichtung der Behältnisse (10) hinter der ersten Bildaufnahmeeinrichtung (12) angeordnet ist, wobei die zweite Bildaufnahmeeinrichtung (18) und die erste Bildaufnahmeeinrichtung (12) sich bezüglich des Transportpfades der Behältnisse gegenüberliegen.

**5.** Vorrichtung (1) nach wenigstens einem der vorangegangenen Ansprüche,
**dadurch gekennzeichnet, dass**
die Behältnisbewegungseinrichtung (4) eine Drehung der Behältnisse (10) um ihre Längsachse bewirkt

**6.** Vorrichtung (1) nach wenigstens einem der vorangegangenen Ansprüche,
**dadurch gekennzeichnet, dass**
die Behältnisbewegungseinrichtung (4) eine Schwingungserzeugungseinheit aufweist, welche die Behältnisse (10) in eine schwingende Bewegung versetzt.

**7.** Vorrichtung (1) nach wenigstens einem der vorangegangenen Ansprüche,
**dadurch gekennzeichnet, dass**
die Vorrichtung (1) eine Behältnisdreheinrichtung (82, 84) aufweist, welche in der Transportrichtung der Behältnisse (10) nach der Inspektionseinrichtung (6) angeordnet ist und welche die Behältnisse um einen vorgegebenen Winkel bezüglich ihrer Längsachse dreht.

**8.** Vorrichtung (1) nach wenigstens einem der vorangegangenen Ansprüche,
**dadurch gekennzeichnet, dass**
die Bildaufnahmeeinrichtung (12) derart ausgerichtet ist, dass sie Schwebstoffe aufnimmt, welche sich zwischen einer Oberfläche der Flüssigkeit in dem Behältnis (10) und dem Behältnisboden befinden.

**9.** Verfahren zum Inspizieren von mit Flüssigkeit befüllten Behältnissen (10), wobei die Behältnisse (10) entlang eines vorgegebenen Transportpfades transportiert werden und wenigstens zeitweise mit einer Behältnisbewegungseinrichtung (4) zusätzlich zu der durch den Transport der Behältnisse (10) verursachten Bewegung bewegt werden, um eine Bewegung der in dem Behältnis angeordneten Flüssigkeit zu erzeugen, wobei die Behältnisse (10) mittels einer ersten Inspektionseinrichtung (6) inspiziert werden, nach dem die Bewegung der Behältnisse (10) durch die Behältnisbewegungseinrichtung (4) beendet ist, und die erste Inspektionseinrichtung (6) mit einer ersten Bildaufnahmeeinrichtung (12) eine Seitenwandung der Behältnisse (10) beobachtet,
**dadurch gekennzeichnet, dass**
die Behältnisse (10) nach der Bewegung durch die Behältnisbewegungseinrichtung (4) eine vorgegebene Transportstrecke transportiert werden, bevor sie mit der Inspektionseinrichtung (6) inspiziert werden, so dass sich die Relativgeschwindigkeit der Flüssigkeit gegenüber dem Behältnis vermindert.

**10.** Verfahren nach Anspruch 9,
**dadurch gekennzeichnet, dass**
die Behältnisse (10) mittels einer zweiten Inspektionseinrichtung inspiziert werden, welche in der Transportrichtung nach der Behältnisbewegungseinrichtung (4) und vor der ersten Inspektionseinrichtung (6) angeordnet ist.
